# EUROPEAN PATENT SPECIFICATION

(11) **EP 0 778 102 B1**
(45) Date of publication and mention of the grant of the patent: **27.03.2002**
(21) Application number: 96921100.2
(22) Date of filing: 27.06.1996
(51) Int. Cl.: B23D 61/18

(54) **WIRE SAW**
Drahtsäge
SCIE A CABLE

(30) Priority: 28.06.1995 JP 19788395
(43) Date of publication of application: 11.06.1997
(73) Proprietor: A.L.M.T.CORP., Tokyo (JP)
(72) Inventor: OGINO, Takao Sumitomo Electric Fabrics Co., Ltd., Toyama 939-03 (JP); YAMADA, Susumu Sumitomo Electric Fabrics Co., Ltd., Toyama 939-03 (JP); MIYAO, Ichiro Osaka Diamond Industrial Co., Osaka 593 (JP); KOROKU, Shuichiro Osaka Diamond Industrial Co., Sakai-shi Osaka 593 (JP); FUJIMOTO, Yuhei Osaka Diamond Industrial Co., Sakai-shi Osaka 593 (JP)
(74) Representative: Grosse, Wolfgang, Dipl.-Ing.
(86) International application number: JP9601778
(87) International publication number: WO9701410

(56) References cited:
- DE-A- 2 451 153
- JP-A- 1 222 814
- JP-A- 5 345 219
- JP-A- 6 039 632
- JP-U- 5 070 828
- JP-Y- 5 024 413
- US-A- 4 907 564
- US-A- 5 216 999
- PATENT ABSTRACTS OF JAPAN vol. 18, no. 258 (M-1606), 17 May 1994 & JP 06 039632 A (NORTON KK), 15 February 1994,
- PATENT ABSTRACTS OF JAPAN vol. 18, no. 186 (M-1585), 30 March 1994 & JP 05 345219 A (MITSUBISHI MATERIALS CORP), 27 December 1993,

## Description

### Technical Field

The present invention relates to a wire saw which is employed for cutting stone, concrete or the like, and more particularly, it relates to a diamond wire saw in which a plurality of grinding members are arranged on a wire rope at prescribed intervals with interposition of an elastic member (see for example US 4 907 564).

### Background Technique

A conventional diamond wire saw is disclosed in European Patent Laying-Open No. 0,160,625, for example.

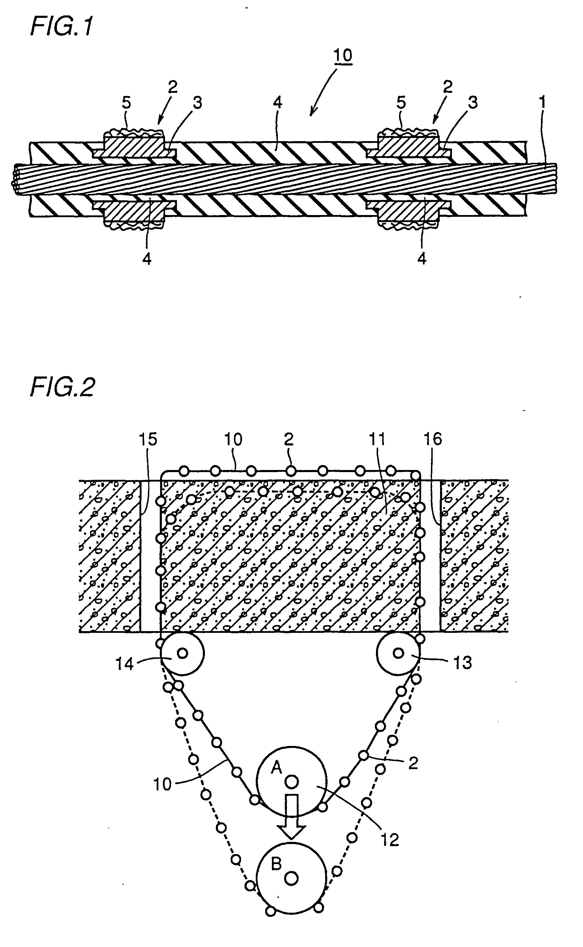

Fig. 1 is a sectional view along an axis showing a part of such a conventional diamond wire saw. As shown in Fig. 1, the diamond wire saw 10 comprises a wire rope 1, grinding members 2, and a rubber elastic member 4. A plurality of annular grinding members 2 are inserted and mounted along the longitudinal direction on the wire rope 1 at prescribed intervals. The grinding members 2 and the wire rope 1, and the grinding members 2 which are adjacent to each other on the wire rope 1 are connected with each other by the rubber elastic member 4 preferably consisting of a rubber material as a flexible coating member. The grinding members 2 comprise bodies 3 and abrasive layers 5. The abrasive layers 5 consist of superabrasives such as diamond particles which are formed on outer peripheral surfaces of the bodies 3 by electroplating or metal sintering.

This type of diamond wire saw structured as described above, which can attain excellent dimensional accuracy in cutting of stone, concrete or the like at a relatively low price for the apparatus and the cost, is frequently employed.

The diamond wire saw having such a structure is generally used as shown in Fig. 2.

First, through holes 15 and 16 are formed in a workpiece 11 such as stone or a concrete wall by a core drill or the like. Then, the diamond wire saw 10 is passed through these through holes 15 and 16, and wound on guide pulleys 13 and 14. Then, the diamond wire saw 10 is wound on a driving pulley 12, while the diamond wire saw 10 is brought into an endless state for forming a closed loop. Thus, the diamond wire saw 10 is provided in the form of a loop, so that the diamond wire saw 10 is arranged along the workpiece 11, and engaged with the driving pulley 12 through the proper guide pulleys 13 and 14.

The diamond wire saw 10 is set in the aforementioned manner, and the driving pulley 12 which is at a position A is driven by hydraulic pressure, for example, in a state applying pressure toward a position B, i.e., in such a direction that the diamond wire saw 10 presses the workpiece 11. At this time, the diamond wire saw 10 is made to travel at a high speed of 25 to 30 m/sec., while supplying cooling water to cut portions of the workpiece 11.

In the aforementioned operation of the diamond wire saw 10, the abrasive layers of the grinding members 2 impactively come into contact with the workpiece 11, so that the cutting progresses while repeating fine crushing.

Since the diamond wire saw is used in such a manner, not only tensile force but various mechanical external force such as impact force and bending force is applied to the diamond wire saw. The diamond wire saw 10 is structured as shown in Fig. 1, and hence it comes to that this mechanical external force is finally applied to the wire rope 1 of the diamond wire saw 10.

In the wire rope 1, however, its outer peripheral portion is merely covered with the rubber elastic member 4, and hence the bond strength between the wire rope 1 and the rubber elastic member 4 is not necessarily sufficient. Thus, there have been such problems that separation takes place between the wire rope 1 and the rubber elastic member 4, and protection of the wire rope 1 with the rubber coating member 4 is not sufficient.

Namely, separation takes place between the rubber elastic member 4 and the grinding members 2, and between the rubber elastic member 4 and the wire rope 1, due to repeating bending and mechanical external force such as impact applied to the diamond wire saw 10. When such separation takes place, the grinding members 2 rotate on the wire rope 1 or move in the longitudinal direction, and the bodies 3 rub against the wire rope 1 and are worn away. Thus, the wire rope 1 may have been worn away and broken in an early stage.

In the concrete, there has been such a problem that end surfaces of the grinding members 2 (end surfaces of the bodies 3 of the grinding members 2) come into contact with the wire rope, the bodies are worn away, the wire rope is damaged, and sometimes rupture of the grinding members 2 or breaking of the wire rope takes place when the grinding members 2 come to rotate about the wire rope 1.

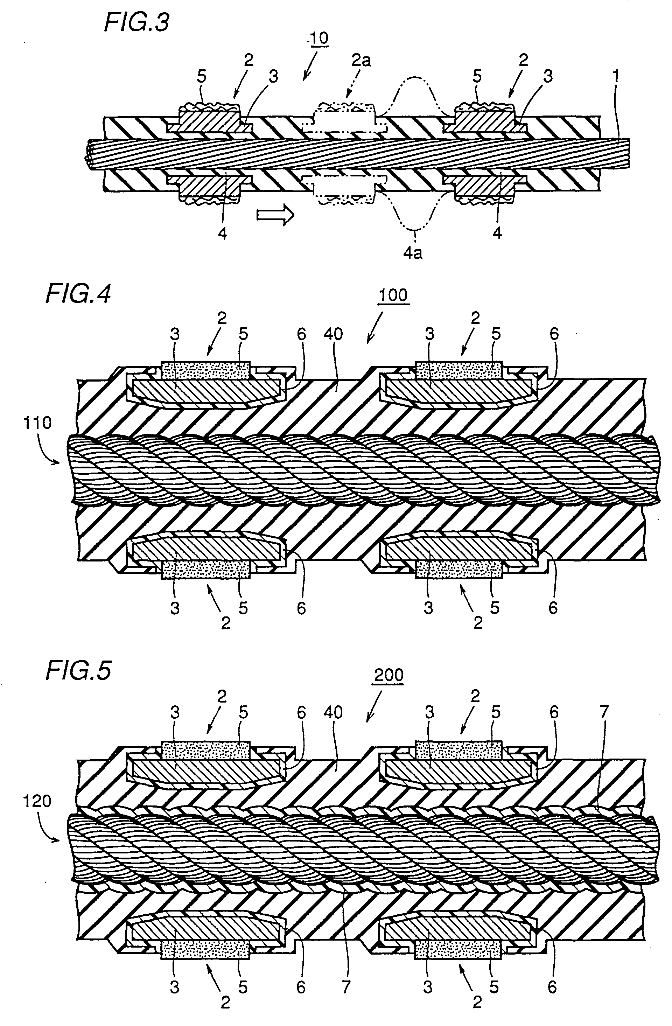

When a grinding member 2 moves to a position indicated by 2a in a direction shown by arrow on the wire rope 1 as shown in Fig. 3, further, the rubber elastic member is compressed between the same and the adjacent grinding member 2, and swells up as shown at 4a. This phenomenon is called a jam. There has been such a problem that, when the space between the adjacent grinding members reduces and the rubber elastic member abnormally swells up between the adjacent grinding members, the same clogs in a cutting groove of the workpiece, to finally cause breaking of the wire rope.

Thus, there has been such a problem that mechanical damage of the wire rope takes place in an early stage due to separation caused between the rubber elastic member and the grinding members and between the rubber elastic member and the wire rope, and the life of the diamond wire saw shortens as a result.

Further, there has been such a problem that water infiltrates from the aforementioned separated portions, the wire rope is rusted, and the wire rope is cut in a relatively short time since cooling water is employed for cooling in cutting and removal of chips of the workpiece.

In addition, there has been such a problem that the wire rope is broken although the abrasive layers of the grinding members still remain and the life of the diamond wire saw shortens since reinforcement of the wire rope with the rubber elastic member is not sufficient.

This breaking of the wire rope is an extremely important problem which is concerned not only in the problem of life but in the safety of the handler too, since the wire saw jumps up if the wire rope is broken during travelling with application of tension.

### Disclosure of the Invention

Accordingly, an object of the present invention is to solve the aforementioned disadvantages provided in the conventional diamond wire saw, and to improve bond strength between a wire rope and a rubber elastic member.

Another object of the present invention is to provide a diamond wire saw of a long life having durability, by improving bond strength between a wire rope and a rubber elastic member thereby suppressing mechanical damage of the wire rope and chemical damage caused by rusting of the wire rope.

The wire saw according to the present invention is described in the claims.

According to one preferred Example of the wire saw, the wire rope is made up from a steel cord prepared by plating at least one metal of copper, zinc or tin, or an alloy containing the metal on a surface of a steel wire. In this case, adhesive layers are formed at least between both end surfaces of the grinding members and the elastic member, and between the inner peripheral surfaces of the grinding members and the elastic member. The adhesive layers contain a chlorinated rubber adhesive.

According to another preferred Example of the wire saw of the present invention, the wire rope is made up from a steel wire which is not subjected to the aforementioned plating on its surface. In this case, adhesive layers are formed between both end surfaces of the grinding members and the elastic member, and between the inner peripheral surfaces of the grinding members and the elastic member, and an adhesive layer is further formed also between the wire rope and the elastic member. These adhesive layers contain a chlorinated rubber adhesive.

In another Example of the wire saw according to the present invention, the wire rope includes aramid fiber and a steel wire.

When the wire saw according to the present invention is employed, the following function/effect can be attained:

Grinding members which are provided on a wire rope at prescribed intervals are moved to travel in a state being brought into pressure contact with a workpiece so that cutting of the workpiece is performed. At this time, not only tensile force but various force such as impact force and frictional resistance acts on the wire rope. Further, the wire rope is bent by guide pulleys and a driving pulley in cutting, and hence bending stress is applied to the wire rope.

Due to the above various stress, the conventional wire rope fatigues, and separation takes place between the rubber elastic member and the grinding members, and between the rubber elastic member and the wire rope. Cooling water employed in grinding infiltrates from the separated portions, and rust is gathered on the wire rope, finally resulting in a breaking accident of the wire saw.

The aforementioned separation readily takes place in the conventional wire saw, since the rubber elastic member covers only the outer peripheral surface of the wire rope and does not sufficiently infiltrate into the clearances in the inner surface of the wire rope and hence the bonding area between the wire rope and the rubber elastic member is small.

In the diamond wire saw according to the present invention, on the other hand, the clearances between the strands of the wire rope and/or the clearances between the wires are filled with the rubber elastic member. In the wire saw according to the present invention, in particular, the rubber elastic member fills at least 20 % in the internal clearances of the wire rope, the clearances between the strands and the clearances between the wires. Therefore, the rubber elastic member twines around the wire rope while presenting a complicated shape for bringing a physical wedge effect. Thus, the rubber elastic member is strongly bonded to the wire rope, whereby the same is not readily separated.

The rubber elastic member is filled in the clearances between the strands of the wire rope and the clearances between the wires in a molding step, and thereafter the wire rope and the rubber elastic member are strongly bonded with each other by vulcanization bonding in a subsequently performed vulcanization step. In the completed wire saw, therefore, the rubber elastic member becomes a rubber elastic body since the same is vulcanized. This rubber elastic member is present in the clearances between the strands and/or the clearances between the wires forming the strands, whereby flexibility of the wire saw is not damaged.

Due to the aforementioned matter, separation hardly takes place between the rubber elastic member and the wire rope and between the rubber elastic member and the grinding members, whereby rotation of the grinding members about the wire rope and movement of the grinding members along the longitudinal direction, i.e., the axial direction of the wire rope, and the like are prevented. Consequently, the grinding members do not rub against the wire rope, whereby occurrence of breaking of the wire rope is suppressed. Since the aforementioned separation is suppressed, further, there is a small possibility that cooling water infiltrates into the wire rope, and the wire rope is hard to rust. Consequently, the life of the wire saw can be lengthened. Further, the rubber elastic member twines around the wire rope in a complicated shape as hereinabove described, whereby the same can effectively reinforce the wire rope against fatigue by bending. Therefore, a wire saw which is excellent in durability can be obtained.

### Brief Description of the Drawings

Fig. 1 is a sectional view along an axis showing a part of a conventional diamond wire saw.

Fig. 2 is a diagram for illustrating a cutting method for a workpiece as a using method for the diamond wire saw.

Fig. 3 is a diagram for illustrating a problem caused by the fact that grinding members move along the longitudinal direction in the conventional diamond wire saw.

Fig. 4 is a sectional view along an axis showing a part of a diamond wire saw as one embodiment of the present invention.

Fig. 5 is a sectional view along an axis showing a part of a diamond wire saw as another embodiment of the present invention.

Fig. 6 is a sectional view perpendicular to an axis showing a wire rope employed for the diamond wire saw as one embodiment of the present invention.

Fig. 7 is a diagram for illustrating a preformed rate of the wire rope.

Fig. 8 to Fig. 11 are typical sectional views along axes of wire ropes and rubber elastic members whose states are shown in response to rates at which the rubber elastic members are filled in clearances between strands of the wire ropes and/or wires in accordance with Example of the present invention.

Fig. 12 is a comparativ example of a sectional view of a wire rope.

Fig. 13 is a diagram conceptually showing a bending test apparatus for diamond wire saws employed in Example of the present invention.

Fig. 14 is a diagram for illustrating a part of a swing device of the bending test apparatus shown in Fig. 13.

Fig. 15 is a sectional view perpendicular to an axis showing a wire rope according to still another embodiment of the present invention.

### Best Modes for Carrying Out the Invention

As shown in Fig. 4, a diamond wire saw 100 according to one embodiment of the present invention comprises a wire rope 110, a plurality of grinding members 2, and a rubber elastic member 40. The plurality of grinding members 2 are arranged along the longitudinal direction of the wire rope 110 at prescribed intervals, and enclose the wire rope 110 with interposition of the rubber elastic member 40. Adhesive layers 6 are formed on interfaces between both end surfaces and inner peripheral surfaces of the grinding members 2 and the rubber elastic member 40. These adhesive layers 6 bring an adhesive action between the rubber elastic member 40 and a mold forming the grinding members 2 which are in contact therewith during vulcanization of the rubber elastic member 40.

In general, a steel wire consisting of carbon steel having a carbon content of 0.4 to 1.0 %, or a steel wire consisting of stainless steel (e.g., SUS 304) is employed for the wire rope 110. Particularly in this embodiment, the wire rope 110 is preferably made up from a plurality of steel cords prepared by plating at least one of copper, zinc or tin (including these individual metals and an alloy consisting of a combination of these metals) on surfaces of steel wires. When the wire rope 110 is formed by a steel cord, such as a cord employed as a steel cord for a tire, for example, obtained by plating copper on a surface of a steel wire, plating zinc further thereon, treating the plated steel wire at a high temperature, diffusing the plating metal in the steel wire, and then drawing this steel wire, it is further preferable in view of improvement of bond strength.

Each of the grinding members 2 comprises a substantially cylindrical body 3, and an abrasive layer 5 which is formed on the outer peripheral surface of the body 3. The body 3 consists of stainless steel, for example, and copper plating is performed at least on its outer peripheral surface. The abrasive layer 5 is made up from a substance prepared by dispersing superabrasives such as diamond particles, cubic boron nitride (cBN) particles or the like in a metal matrix. The particle size, the type and the degree of concentration of such superabrasives are properly selected in response to use conditions. The abrasive layer 5 is fixed by sintering powder of copper and cobalt into which the aforementioned superabrasives are mixed on the body 3. Alternatively, the superabrasives may be fixed onto the body 3 by electrolytic plating, for forming the abrasive layer 5.

Tapers are preferably formed on both end portions of the inner peripheral surface of the body 3, in order to facilitate insertion of the wire rope 110, and to facilitate approach of the rubber elastic member 40. Further, the abrasive layer 5 is preferably formed not to cover both end portions of the body 3 in the axial direction.

As the material for the adhesive layer 6 which is formed on the interface between the rubber elastic member 40 and the grinding member 2, that bringing an adhesive action of rubber and the metal during vulcanization of the rubber is employed. There are a chlorinated rubber adhesive which is mainly composed of chlorinated rubber, a hydrochlorinated rubber adhesive which is mainly composed of hydrochlorinated rubber and the like as such adhesives, and it is more preferable to employ the former.

The chlorinated rubber adhesive is prepared by dissolving chlorinated rubber in a solvent such as toluene or the like along with an assistant such as polychloroprene, nitrile rubber or polyisocyanate, and there is "Chemlok 220" (registered trade mark; by Lord Corporation) as a representative one. In case of employing this Chemlok 220, adhesive strength can be further improved by also employing adhesive paste mainly composed of phenolic resin as an under coat. This adhesive paste mainly composed of phenolic resin is prepared by dissolving single thermosetting phenolic resin or phenolic resin and a small amount of modified resin such as polyacetal resin in a solvent such as methyl ethyl ketone, and there is "Chemlok 205 (registered trade mark; by Lord Corporation) as a representative example thereof.

The rubber elastic member 40 is formed to enclose the wire rope 110 by molding employing a mold, for example. In more detail, the aforementioned adhesive is applied to prescribed regions of the grinding members 2, and thereafter the wire rope 110 and the grinding members 2 are inserted in the mold to be in the arrangement state shown in Fig. 4. Then, the rubber forming the rubber elastic member 40 is forced in an unvulcanized state to fill up cavities formed in the mold. The rubber forced in such a manner is filled not only in the clearances between the grinding members 2 and the wire rope 110, but in the clearances between strands forming the wire rope and/or wires forming the strands.

Then, vulcanization is performed on the rubber in the mold while maintaining pressure of a prescribed level. In the vulcanization of the rubber, it is more preferable to perform the vulcanization by blending a substance exhibiting an effect of improving adhesion with the steel cord forming the wire rope 110, such as a cobalt salt of organic acid like cobalt stearate, for example, by 1 to 2 parts by weight per 100 parts by weight of rubber.

As concrete blending of the unvulcanized rubber material employed for formation of the rubber elastic member 40, zinc oxide, sulfur, silica, carbon, a lubricant (stearic acid), a vulcanization accelerator, an adhesion assistant, and cobalt stearate are added at prescribed rates to 100 parts by weight of rubber which is made up from dry rubber and liquid rubber.

As the vulcanization accelerator, a vulcanization accelerator of a guanidine system, a thiazole system, a thiuram system or the like is suitable, in general. The vulcanization is performed under conditions of a temperature of about 150°C and a time of 10 minutes, for example. At this time, the adhesive action by the aforementioned adhesive is also attained.

In the aforementioned concrete composition of the rubber material, natural rubber (NR) and nitrile butadiene rubber (NBR) are employed as the dry rubber or the liquid rubber.

In the rubber elastic member 40 formed in such a manner, parts thereof are formed to cover parts of the bodies 3, as shown in Fig. 4. Thus, holding strength of the grinding members 2 by the rubber elastic member 40 can be further improved.

Fig. 5 shows the structure of a diamond wire saw 200 according to another embodiment of the present invention. Points different from the diamond wire saw 100 shown in Fig. 4 are that a wire rope 120 is made up from a steel wire which is not subjected to plating on its surface, and that an adhesive layer 7 is formed also on an interface between the wire rope 120 and a rubber elastic member 40. The remaining structure of the diamond wire saw 200 is similar to the structure of the diamond wire saw 100 shown in Fig. 4, as described in the above in detail. In this embodiment, that similar to the material forming the aforementioned adhesive layers 6 is employed as the material forming the adhesive layer 7. The adhesive is applied not only to the outer peripheral surface of the wire rope 120 but to enter clearances between strands forming the wire rope and/or wires forming the strands.

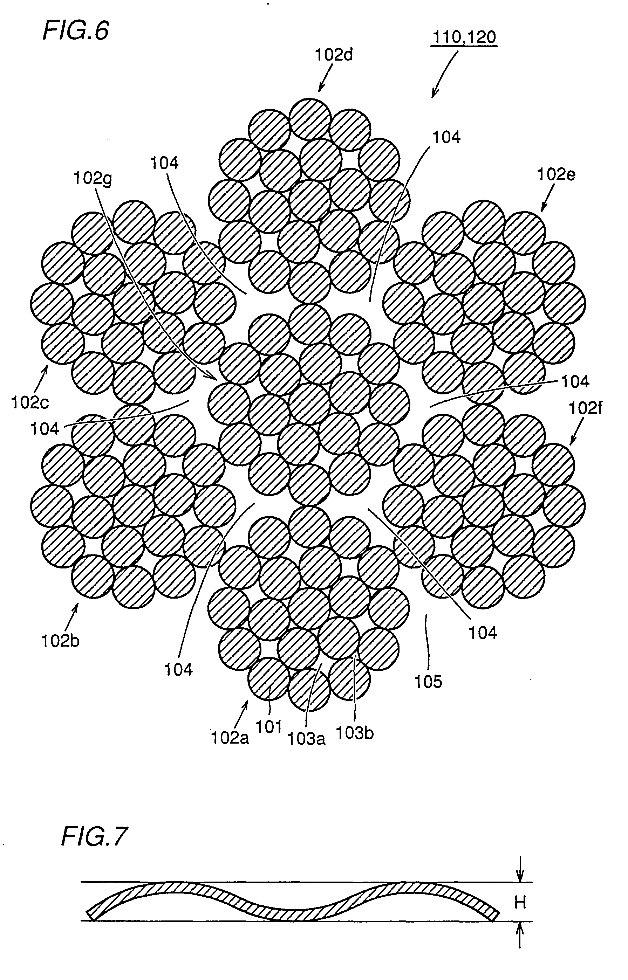

Fig. 6 shows the structure of the wire rope 110 or 120 employed in the aforementioned two embodiments. As an example, nineteen wires 101 consisting of steel wires are twisted to form filamentary strands 102a to 102g. Further, seven these strands 102a to 102g are twisted to form the wire rope 110 or 120.

Clearances 103a and 103b between the wires 101 are present in the wire rope 110 or 120. Noting the strand 102a, for example, two types of clearances are present between the 19 wires 101 forming the strand 102a. Namely, relatively wide clearances 103a and relatively narrow clearances 103b are present as the clearances between the wires 101.

Further, six strands 102a to 102f enclose the strand 102g serving as the center, thereby forming the wire rope 110 or 120. As the clearances between the strands, clearances 104 are formed between the strands 102a, 102b and 102g, between the strands 102b, 102c and 102g, between the strands 102c, 102d and 102g, between the strands 102d, 102e and 102g, between the strands 102e, 102f and 102g, and between the strands 102a, 102f and 102g respectively. These clearances 103a, 103b and 104 are present independently of the outer peripheral portion 105 of the wire rope 110 or 120.

In the diamond wire saw of the present invention, it is most preferable that the rubber elastic member is filled not only in the outer peripheral portion 105 of the wire rope 110 or 120, but over all regions of the clearances independently present in the interior of the wire rope 110 or 120, the clearances 104 between the strands and the clearances 103a and 103b between the wires. When at least 20 % is filled with the rubber elastic member in the overall regions of the clearances 104 between the strands and the clearances 103a and 103b between the wires, the rubber elastic member twines around the wire rope while presenting a complicated shape, thereby bringing a physical wedge effect. Thus, the rubber elastic member is strongly bonded to the wire rope.

In general, manufacturing of a diamond wire saw is performed by setting a wire rope and grinding members on prescribed positions of a mold, molding a rubber elastic member by a general compression molding method, an injection molding method or the like, and connecting the respective ones of the wire rope, the grinding members and the rubber elastic member with each other through a vulcanization step.

As means for filling the clearances of the aforementioned wire rope with the rubber elastic member and providing a wedge effect, the following ones are listed:
(1) A method of employing a material having excellent flowability as the material for the rubber elastic member.
(2) A method of performing working under a specific molding condition such as high-pressure molding or high-temperature molding.
   A method of forcing the rubber elastic member into the clearances by pressure is employed in the high-pressure molding. If flowability of the rubber elastic member increases as the temperature increases, a method of filling the rubber elastic member in the clearances by high temperature molding of heating the same to a higher temperature is employed.
(3) A method of employing a wire rope having a large preformed rate.

The preformed rate is measured in the following manner: After six strands forming the wire rope are loosened, the distance H between the crests and the troughs of each strand is measured as shown in Fig. 7, and the distance H is divided by the actual diameter of the rope, to obtain its rate. The preformed rate of this wire rope is defined by the average value of the values of the six strands.

When that having a large preformed rate measured in this manner is employed, the clearances between the strands forming the wire rope and/or the clearances between the wires can be increased, and an operation of filling the clearances of the wire rope with the rubber elastic member is facilitated.

While various methods are conceivable in addition to the aforementioned three methods, which method is selected is decided in consideration of merits and demerits as to those methods.

However, the point of the present invention resides in how strong the wire rope and the rubber elastic member can be bonded with each other by introducing the rubber elastic member into the clearances of the wire rope and bonding the same in the vulcanization step thereby making the rubber elastic member twine around the wire rope, and the method for implementing it may be any means so far as the same can embody strong bonding.

While the present invention is now concretely described with reference to Examples, the present invention is not restricted to these. A method of varying blending compositions of rubber elastic bodies for improving flowability of unvulcanized rubber in molding was executed, as an example thereof.

In the concrete, five types of samples A to E obtained by blending dry rubber materials serving as principal materials with liquid rubber materials of low molecular weights as shown in the following Table 1 for improving flowability of rubber elastic members and suppressing reduction of physical strength were prepared as evaluated.

The sample A, which has been generally used, is a sample for comparison. As to the numerical values indicating blending compositions in Table 1, blending compositions of respective additives are indicated in units of parts by weight assuming that the total of dry rubber and liquid rubber is 100 parts by weight. Natural rubber was employed as the dry rubber and the liquid rubber.

**[Table 1]**

| Blending Composition | Comparative Example | Example | | | |
|---|---|---|---|---|---|
| | A | B | C | D | E |
| Dry Rubber | 100 | 95 | 90 | 85 | 80 |
| Liquid Rubber | 0 | 5 | 10 | 15 | 20 |
| Zinc Oxide #3 | 15 | 15 | 15 | 15 | 15 |
| Sulfur | 3 | 3 | 3 | 3 | 3 |
| Silica | 15 | 15 | 15 | 15 | 15 |
| Carbon | 45 | 45 | 45 | 45 | 45 |
| Lubricant (Stearic Acid) | 0.5 | 0.5 | 0.5 | 0.5 | 0.5 |
| Vulcanization Accelerator | 1.5 | 1.5 | 1.5 | 1.5 | 1.5 |
| Bonding Assistant ① | 4 | 4 | 4 | 4 | 4 |
| Bonding Assistant ② | 4 | 4 | 4 | 4 | 4 |
| Cobalt Stearate | 2 | 2 | 2 | 2 | 2 |

Table 2 shows physical properties evaluated as to the five types of samples A to E.

According to Table 2, viscosity, tensile strength and rubber hardness reduce while flowability and elongation increase as the blending ratio of liquid rubber increases. As to adhesiveness, no particular change was observed in the range of the liquid rubber ratio of 0 to 20 %.

**[Table 2]**

| Evaluated Item | Comparative Example | Example | | | |
|---|---|---|---|---|---|
| | A | B | C | D | E |
| Moony Viscosity (ML₁₊₄) | 78 | 50 | 35 | 28 | 24 |
| Tensile Strength (kg/cm²) | 240 | 215 | 204 | 189 | 180 |
| Rubber Hardness | ○ | ○ | ○ | Δ | × |
| Flowability to Clearances between Wires | × | × | ○ | ○ | ○ |
| Bondability | ○ | ○ | ○ | ○ | ○ |
| Durability | × | ○ | ⓞ | ○ | Δ |

As to the wire rope, on the other hand, the wire rope was formed by steel cords prepared by plating copper on surfaces of steel wires by 70 %, further plating zinc thereon by 30 %, diffusing the copper and the zinc at a high temperature and drawing the wires, in order to improve bonding force between the same and the rubber elastic member. The specification of the wire rope is as follows:
Wires: steel cords of steel wires having diameters of 0.32 mmφ on which brass was plated in the aforementioned manner
Structure: As shown in Fig. 6, the central strand 102g was made up by the wires 101 consisting of (1 + 6 + 12) steel cords, and the six strands 102a to 102f arranged around the central strand were made up by the wires 101 consisting of (1 + 6 + 12) steel cords.
Diameter of Wire Rope: 4.76 mmφ
Tensile Strength of Wire Rope: at least 1910 kg

A non-oil product of 7 x 19 blast plated wire ordinary Z twist (BG/O) was selected to satisfy the aforementioned specification.

As shown in Fig. 4, the adhesive of "Chemlok 205" was applied to prescribed regions (at least end surfaces and inner peripheral surfaces) of the grinding members 2 as an under coat, and the adhesive of "Chemlok 220" was applied as an over coat, for forming the adhesive layers 6. Thereafter these grinding members 2 were inserted in the wire rope 110 selected in the aforementioned manner to be in the arrangement state shown in Fig. 4, and the wire rope 110 and the grinding members 2 were set on prescribed positions in the interior of the mold so that the intervals between the grinding members 2 were 25.0 mm. As the rubber elastic members, rubber materials of the aforementioned five types of compositions were forced to fill up clearances defined in the mold, in unvulcanized states respectively. Pressure of 400 kg/cm² was applied to the rubber materials, to mold the same by a general compression molding method. Thereafter vulcanization was performed under conditions of a temperature of 160°C and 10 minutes, for forming five types of diamond wire saws 100 in correspondence to the samples of the respective rubber elastic members.

Three wire saws samples were prepared as to each of these five types of diamond wire saws 100. In order to investigate flowability of rubber as to the respective types of diamond wire saws, the wire ropes were cut perpendicularly to the longitudinal directions, i.e., the axial directions of the wire ropes, and filling states of the rubber elastic members in the clearances of the wire ropes were observed.

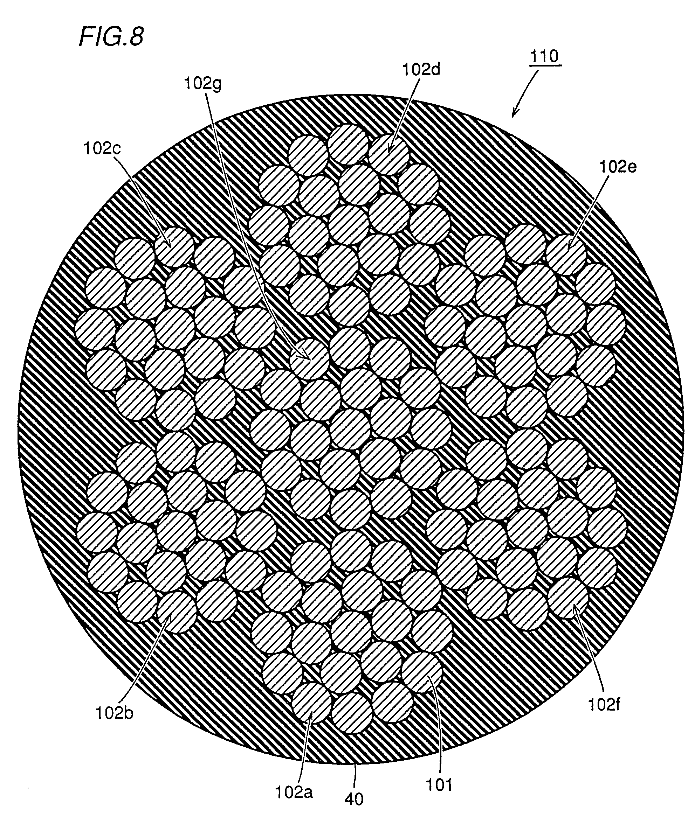

The results the observation are shown in Fig. 8 to Fig. 12 and Table 3.

Fig. 8 is a typical diagram showing such a state that all clearances between strands 102a to 102g of a wire rope 110 and between wires 101 are filled with a rubber elastic member 40 as a result of observation.

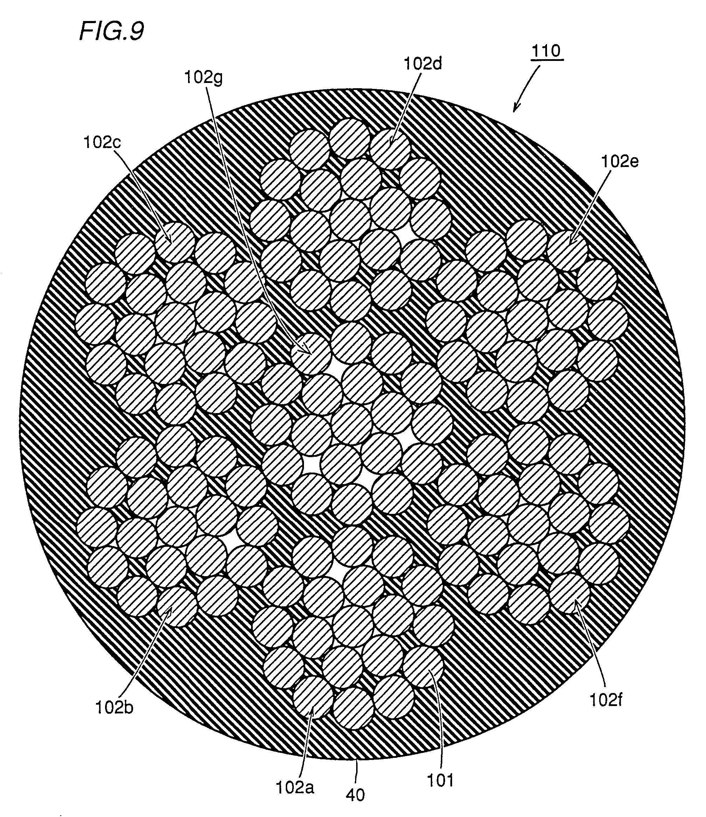

Fig. 9 is a typical diagram showing such a state that all clearances between strands 102a to 102g are filled with a rubber elastic member 40 in a wire rope 110 but partial clearances are filled with the rubber elastic member 40 between wires 101 as an observation result. It is understood that the filling factor of the rubber elastic member 40 is high in portions close to the outer peripheral portion of the wire rope 110 in the clearances between the wires 101, and the rubber elastic member 40 is hardly filled between the wires 101 in the central strand 102g.

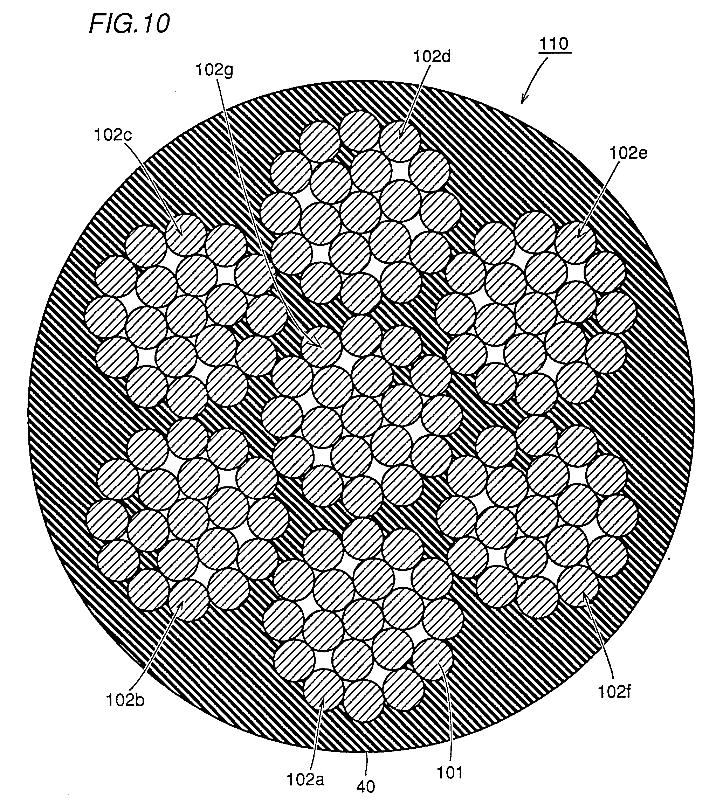

Fig. 10 is a typical diagram showing such a state that all clearances between strands 102a to 102g are filled with a rubber elastic member 40 in a wire rope 110, while parts of clearances between wires 101 are filled with the rubber elastic member 40 as an observation result. In portions close to the outer peripheral portion of the wire rope 110 in the clearances between the wires 101, the filling factor of the rubber elastic member 40 is relatively high.

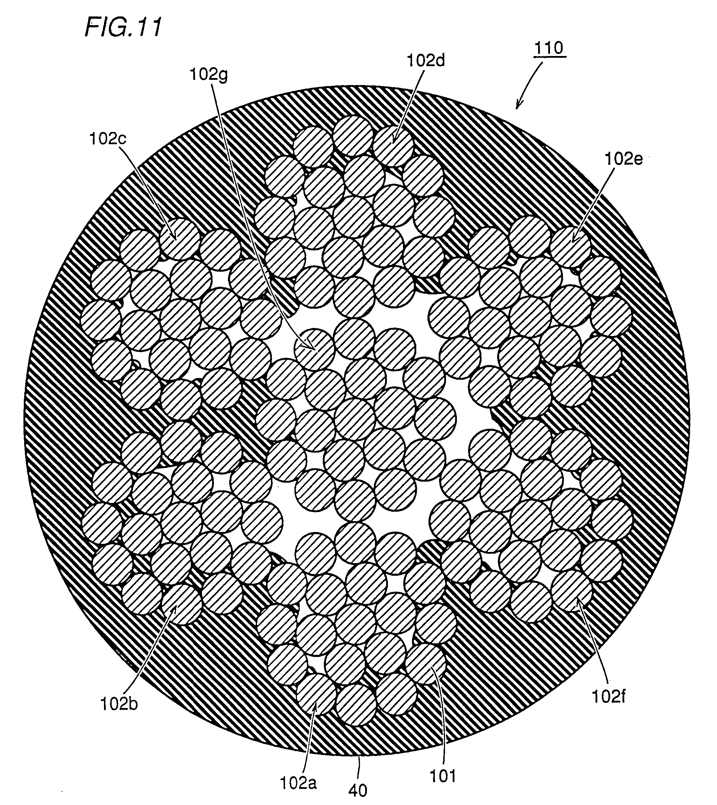

Fig. 11 is a typical diagram showing such a state that parts of clearances between strands 102a to 102g and parts of clearances between wires 101 are filled with a rubber elastic member 40 in a wire rope 110. This filled state does not form a constant pattern, depending on the manner of applying compression molding pressure and the state of the wire rope.

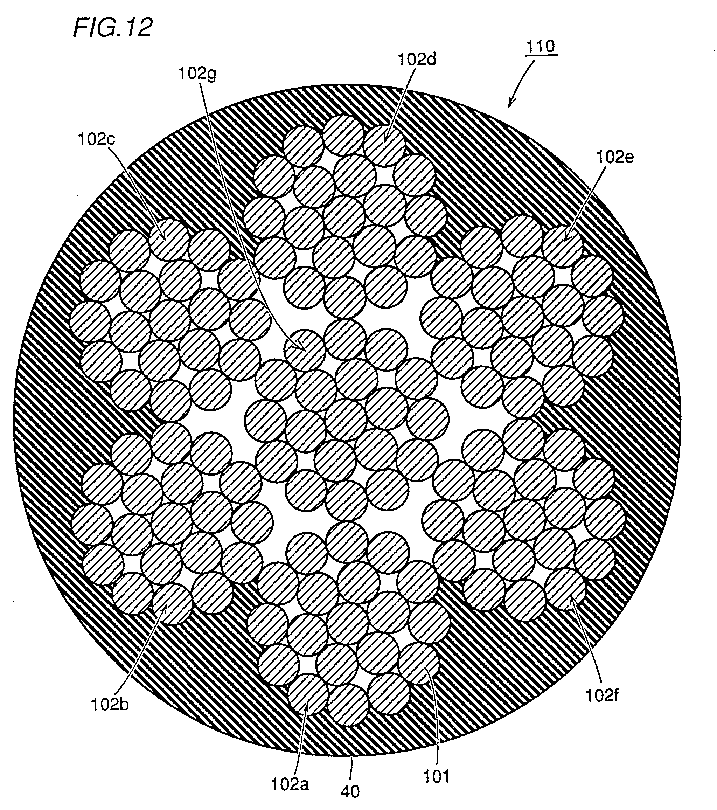

Fig. 12 is a typical comparativ diagram showing such a state that clearances of a wire rope 110, i.e., clearances between strands and wires are hardly filled with a rubber elastic member 40 although the rubber elastic member 40 is present on the outer peripheral portion of the wire rope 110 as an observation result.

**[Table 3]**

| Sample | Results of Observation |
|---|---|
| A | The rubber material was so inferior in flowability that the same filled no clearances of the wire rope as shown in Fig. 12, or filled only parts of the clearances between the strands and parts of those between the wires forming the outermost layer as shown in Fig. 11. The filling factor for the clearances was less than 20 %. |
| B | The clearances between the strands were substantially completely filled as shown in Fig. 10, or parts of the clearances between the strands and parts of those between the wires forming the outermost layer were filled as shown in Fig. 9. The filling factor for the clearances was at least 20 % and less than 80 %. |
| C | The clearances of the wire rope were completely filled similarly to Fig. 8. The filling factor for the clearances was at least 80 %. |
| D and E | Similar to the sample C. |

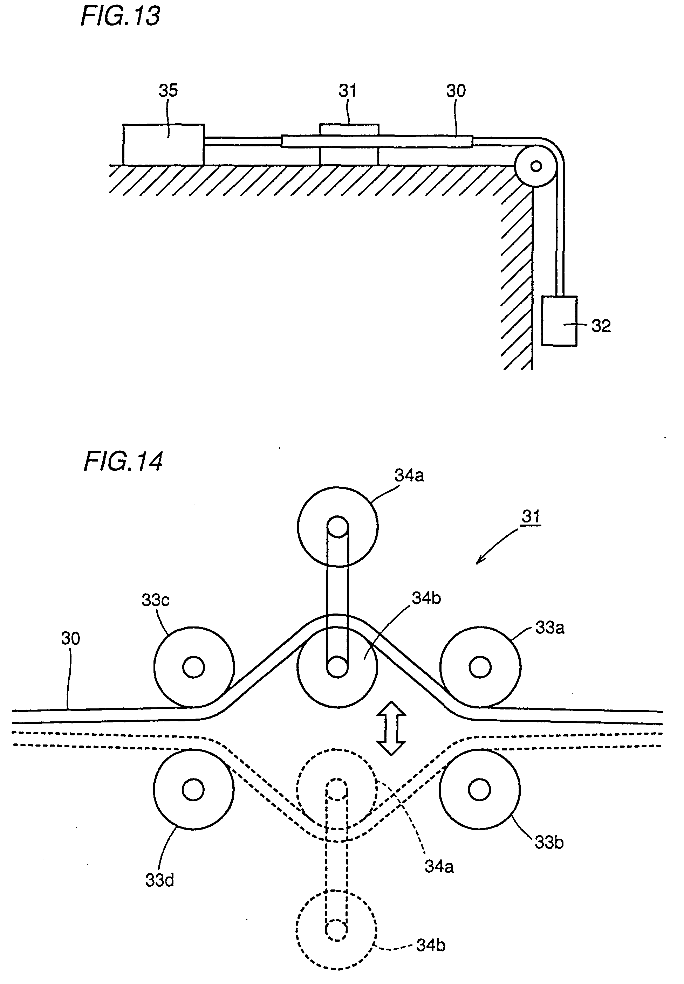

Further, a bending test was made as to the respective ones of the five types of diamond wire saws, with an apparatus shown in Fig. 13 and Fig. 14. As shown in Fig. 13, an end of each diamond wire saw 30 was fixed on a table by a clamp device 35, while th other end of the diamond wire saw 30 was connected to a weight 32 of 7.8 kg in weight through a swing device 31 via a roller, to apply a load. As shown in Fig. 14, the intermediate portion of the diamond wire saw 30 is bent by four fixed rollers 33a to 33d, and also bent by two movable rollers 34a and 34b which are arranged between the four fixed rollers 33a to 33d. These two movable rollers 34a and 34b reciprocate in directions shown by arrow in Fig. 14, whereby the diamond wire saw 30 interposed between the movable rollers 34a and 34b is bent by being swung along the directions.

Such bending was repeatedly carried out, to measure the numbers of times up to separation of the wire ropes and the rubber elastic members and breaking of the wire ropes.

Consequently, diamond wire saws 100 (Fig. 4) prepared by employing the samples B, C, D and E as the materials for the rubber elastic members exhibited numbers of breaking times which were higher by about 25 % as compared with the diamond wire saw employing the sample A of comparative example, as shown in Table 4. This is because the clearances of the wire ropes 110 were filled with the rubber elastic bodies 40 by at least 20 % in Example of the diamond wire saws 100 prepared by employing the samples B, C, D and E as the materials for the rubber elastic members to provide wedge effects, as shown in Table 3. As described above, it is understood that the diamond wire saw 100 according to the present invention is improved in durability by about 25 % as compared with the conventional diamond wire saw.

**[Table 4]**

| Sample | Comparative Example | Example | | | |
|---|---|---|---|---|---|
| | A | B | C | D | E |
| First Time | 2152 | 2320 | 2700 | 2868 | 2406 |
| Second Time | 1857 | 2561 | 2751 | 2709 | 2795 |
| Third Time | 1782 | 2842 | 3061 | 2547 | 2449 |
| Average Value | 1930 | 2574 | 2837 | 2708 | 2550 |
| Dispersion | 370 | 522 | 361 | 321 | 389 |

On the other hand, durability was investigated by a bending test as to diamond wire saws which were prepared by filling clearances by employing other molding methods, a high-temperature method and a high-pressure method for sufficiently filling rubber elastic members in clearances of wire ropes and improving bond strength after vulcanization treatment, whereby evaluation results substantially similar to the above were obtained.

Further, also as to the diamond wire saw 200 prepared by making up the wire rope 120 with a steel wire which was not subjected to plating treatment, and forming the adhesive layers 7 and 6 between the wire rope 120 and the rubber elastic member 40 and between the grinding members 2 and the elastic member 40 respectively as shown in Fig. 5, five types of diamond wire saws were prepared similarly to the above. In this case, the adhesive was applied not only to the outer periphery of the wire rope 120 but to also enter the clearances between the strands forming the wire rope and the wires forming the strands as to the adhesive layer 7 in Fig. 5. The filling states of the rubber elastic members in the clearances of the wire ropes were observed similarly to the above, whereby results similar to Table 3 were obtained. Durability of the diamond wire saws was investigated by a bending test, and results thereof were also similar to those shown in Table 4.

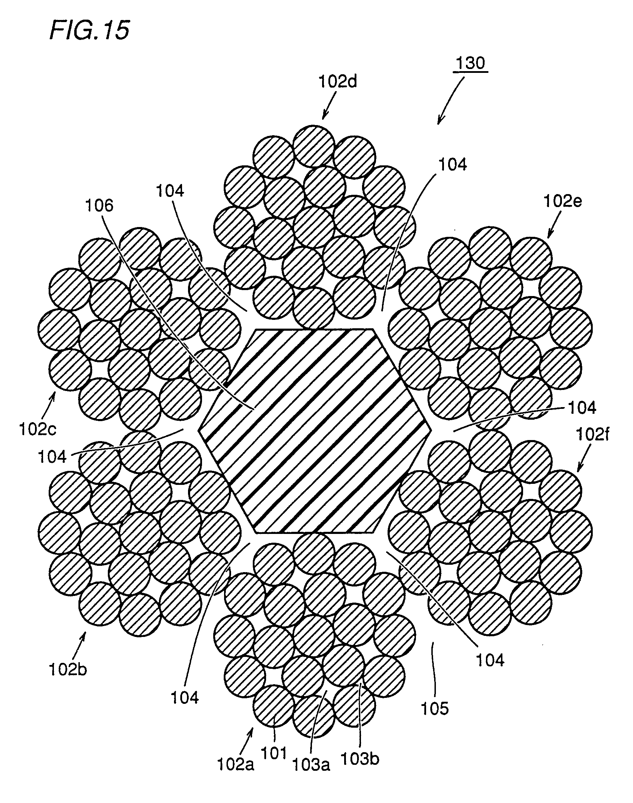

Further, five types of diamond wire saws similar to the above were prepared by employing a wire rope 130 using an aggregate 106 of aramid fiber for a central strand part as shown in Fig. 15. Influences by flowability of rubber elastic members were investigated as to the respective diamond wire saws.

Consequently, durability was improved by about 10 % in the diamond wire saws employing the samples B to E as compared with the diamond wire saw employing the sample A, although no remarkable improvement was observed between the sample A and the samples B to E as the materials for the rubber elastic members with durability of the diamond wire saws of about 25 % as described above. This is conceivably because the clearances between the strands are partially filled with the aramid fiber from the first since the aggregates of aramid fiber are employed for the central strand parts, and the clearances between wires of the strands around the central strands are mainly filled with the rubber elastic members.

In the diamond wire saw according to the present invention, as hereinabove described, the rubber elastic member enters the clearances in the interior of the wire rope, and the wire rope and the rubber elastic member strongly bonded with each other due to a wedge effect. Thus, it is possible to obtain a diamond wire saw having a long life, which is excellent in durability in cutting of stone or concrete.

The embodiments and Examples disclosed in the above description must be considered as being illustrative and not restrictive in all points.

### Industrial Availability

The wire saw according to the present invention is effectively employed for cutting of stone or concrete, and exhibits high durability and a long life in particular.

## Claims

1. A wire saw (100; 200) comprising:
a wire rope (110; 120; 130);
a plurality of grinding members (2) having two end surfaces, outer peripheral surfaces and inner peripheral surfaces, enclosing said wire rope and being arranged along the longitudinal direction of said wire rope at prescribed intervals; and
an elastic member (40) of rubber enclosing and covering said wire rope between a plurality of said grinding members, and being filled also between said inner peripheral surfaces of said grinding members and said wire rope, wherein
said wire rope (110; 120; 130) includes a plurality of strands (102a to 102g), each of said strands includes a plurality of wires (101), and said wire rope further has first clearances (104) between a plurality of said strands and second clearances (103a, 103b) between a plurality of said wires, **characterised in that**
said elastic member filling at least 20 % of clearances consisting of the first clearances between said strands and the second clearances between said wires, and said elastic member (40) contains in its unvulcanized state dry rubber and liquid rubber.

2. The wire saw in accordance with claim 1, wherein said wire rope (110) is made up from a steel cord prepared by plating at least one metal being selected from a group consisting of copper, zinc and tin, or an alloy containing said metal on a surface of a steel wire.

3. The wire saw in accordance with claim 2, further comprising adhesive layers (6) at least between the two end surfaces of said grinding members (2) and said elastic member (40), and between the inner peripheral surfaces of said grinding members (2) and said elastic member (40).

4. The wire saw in accordance with claim 3, wherein said adhesive layers (6) contain a chlorinated rubber adhesive.

5. The wire saw in accordance with claim 1, wherein said wire rope (120) is made up from a steel wire.

6. The wire saw in accordance with claim 5, further comprising adhesive layers (6) between the two end surfaces of said grinding members (2) and said elastic member (4), and between the inner peripheral surfaces of said grinding members (2) and said elastic member (40), and an adhesive layer (7) between said wire rope (120) and said elastic member (40).

7. The wire saw in accordance with claim 6, wherein said adhesive layers (6, 7) contain a chlorinated rubber adhesive.

8. The wire saw in accordance with claim 1, wherein said wire rope (130) includes aramid fiber (106) and a steel wire.

## Patentansprüche

1. Eine Drahtsäge (100; 200), umfassend:
ein Drahtseil (110; 120; 130);
mehrere Schleifelemente (2) mit zwei Endflächen, äußeren Randflächen und inneren Randflächen, die das Drahtseil einschließen und entlang der Längsrichtung des Drahtseils in vorgeschriebenen Intervallen angeordnet sind; und
ein elastisches Element (40) aus Gummi, welches das Drahtseil zwischen mehreren der Schleifelemente einschließt und bedeckt, und welches außerdem zwischen den inneren Randflächen der Schleifelemente und dem Drahtseil eingefüllt ist, wobei
das Drahtseil (110; 120; 130) mehrere Stränge (102a bis 102g) enthält, wobei jeder der Stränge mehrere Drähte (101) enthält, und das Drahtseil weiter erste Zwischenräume (104) zwischen mehreren Strängen und zweite Zwischenräume (103a, 103b) zwischen mehreren der Drähte aufweist,
**dadurch gekennzeichnet, dass**
das elastische Element wenigstens 20% der Zwischenräume füllt, die aus den ersten Zwischenräumen zwischen den Strängen und den zweiten Zwischenräumen zwischen den Drähten bestehen, und das elastische Element (40) in seinem nichtvulkanisierten Zustand trockenes und flüssiges Gummi enthält.

2. Drahtsäge nach Anspruch 1, bei der das Drahtseil (110) aus einem Stahlseil gefertigt ist, das durch Beschichten einer Oberfläche des Stahldrahts mit wenigstens einem Metall, ausgewählt aus der Gruppe bestehend aus Kupfer, Zink und Zinn, oder einer das Metall enthaltenden Legierung hergestellt ist.

3. Drahtsäge nach Anspruch 2, die weiter klebende Schichten (6) aufweist, die sich wenigstens zwischen den zwei Endflächen der Schleifelemente (2) und dem elastischen Element (40) und zwischen den inneren Randflächen der Schleifelemente (2) und dem elastischen Element (40) befinden.

4. Drahtsäge nach Anspruch 3, bei der die klebenden Schichten (6) einen chlorierten Gummiklebstoff enthalten.

5. Drahtsäge nach Anspruch 1, bei der das Drahtseil (120) aus einem Stahldraht gefertigt ist.

6. Drahtsäge nach Anspruch 5, die weiter aufweist:
klebende Schichten (6), die sich zwischen den zwei Endflächen der Schleifelemente (2) und dem elastischen Element (4) und zwischen den inneren Randflächen der Schleifelemente (2) und dem elastischen Element (40) befinden, und
eine klebende Schicht (7) zwischen dem Drahtseil (120) und dem elastischen Element.

7. Drahtsäge nach Anspruch 6, bei der die klebenden Schichten (6, 7) einen chlorierten Gummiklebstoff enthalten.

8. Drahtsäge nach Anspruch 1, bei der das Drahtseil (130) eine Aramidfaser (106) und ein Stahldraht enthält.

## Revendications

1. Scie à câble **(100 ; 200)** comprenant :
un câble métallique **(110 ; 120 ; 130) ;**
une pluralité d'éléments de meulage **(2)** ayant deux surfaces d'extrémité, des surfaces périphériques extérieures et des surfaces périphériques intérieures, enserrant ledit câble métallique et agencées le long de la direction longitudinale dudit câble métallique à des intervalles prescrits ; et
un élément élastique **(40)** en caoutchouc enserrant et couvrant ledit câble métallique entre une pluralité desdits éléments de meulage, et disposé également entre lesdites surfaces périphériques intérieures desdits éléments de meulage et ledit câble métallique, dans lequel
ledit câble métallique **(110 ; 120 ; 130)** comprend une pluralité de brins **(102a à 102g),** chacun desdits brins comprend une pluralité de fils **(101)** et ledit câble métallique a, de plus, des premiers interstices **(104)** entre une pluralité desdits brins et des deuxièmes interstices **(103a, 103b)** entre une pluralité desdits fils, **caractérisée en ce que** ledit élément élastique remplit au moins 20 % des interstices constituant les premiers interstices entre lesdits brins et les deuxièmes interstices entre lesdits fils, et ledit élément élastique **(40)** contient, dans son état non vulcanisé, du caoutchouc sec et du caoutchouc liquide.

2. Scie à câble selon la revendication 1, dans laquelle ledit câble métallique **(110)** est constitué d'une corde en acier préparée en plaquant au moins un métal choisi dans le groupe composé du cuivre, du zinc et de l'étain, ou un alliage contenant ledit métal, sur une surface d'un fil d'acier.

3. Scie à câble selon la revendication 2, comprenant de plus des couches adhésives **(6),** au moins entre les deux surfaces d'extrémité desdits éléments de meulage **(2)** et ledit élément élastique **(40),** et entre les surfaces périphériques intérieures desdits éléments de meulage **(2)** et ledit élément élastique **(40)**.

4. Scie à câble selon la revendication 3, dans laquelle lesdites couches adhésives **(6)** contiennent un adhésif au caoutchouc chloré.

5. Scie à câble selon la revendication 1, dans laquelle ledit câble métallique **(120)** est fabriqué à partir d'un fil d'acier.

6. Scie à câble selon la revendication 5, comprenant de plus des couches adhésives **(6)** entre les deux surfaces d'extrémité desdits éléments de meulage **(2)** et ledit élément élastique **(40)**, et entre les surfaces périphériques intérieures desdits éléments de meulage **(2)** et ledit élément élastique **(40)**, et une couche adhésive **(7)** entre ledit câble métallique **(120)** et ledit élément élastique **(40)**.

7. Scie à câble selon la revendication 6, dans laquelle lesdites couches adhésives **(6, 7)** contiennent un adhésif au caoutchouc chloré.

8. Scie à câble selon la revendication 1, dans laquelle ledit câble métallique **(130)** comprend des fibres d'aramide **(106)** et un fil d'acier.
